# EUROPEAN PATENT APPLICATION

(11) **EP 4 715 779 A1**
(43) Date of publication of application: **25.03.2026**
(21) Application number: 24867936.7
(22) Date of filing: 02.08.2024
(51) Int. Cl.: G08G 1/00, B60C 11/24, B60C 19/00, G01C 21/36, G16Y 10/40, G16Y 20/20, G16Y 40/20

(54) **VEHICLE TRAVEL DATA ESTIMATION DEVICE, PROGRAM, AND VEHICLE TRAVEL DATA ESTIMATION METHOD**

(30) Priority: 21.09.2023 JP 2023156553
(71) Applicant: BRIDGESTONE CORPORATION, Chuo-ku Tokyo 104-8340 (JP)
(72) Inventor: SAKAI Yoshikatsu, Tokyo 104-8340 (JP)
(74) Representative: Marks & Clerk LLP
(86) International application number: PCT/JP2024/027740
(87) International publication number: WO 2025/062855

(57) **Abstract**

A vehicle travel data estimation apparatus (10) includes a controller (15) configured to acquire information on a departure point and information on a destination point as information relating to travel of a vehicle (2), estimate a travel route of the vehicle (2) based on the information on the departure point and the information on the destination point, and estimate travel data on the vehicle (2) during travel on the travel route based on the travel route estimated. The travel data includes data on at least one of speed, acceleration, and travel distance.

## Description

### TECHNICAL FIELD

The present disclosure relates to a vehicle travel data estimation apparatus, a program, and a vehicle travel data estimation method.

### BACKGROUND

Conventionally, there is known a technique for estimating a deterioration state of a tire by acquiring travel data detected by a vehicle during travel. In such a technique, for example, speed, acceleration, and the like are acquired as travel data.

For example, PTL 1 discloses a tire wear state estimation system that acquires travel data such as wheel speed, vehicle speed, and acceleration from a vehicle, and estimates a wear state of a tire based on the acquired travel data.

### CITATION LIST

### Patent Literature

PTL 1: JP 2022-40072 A

### SUMMARY

### (Technical Problem)

In order to acquire travel data from a vehicle as data for estimating a deterioration state of a tire, it is necessary to mount sensors for detecting speed, acceleration, and the like on the vehicle, and thus, it has not been easy to acquire travel data from the vehicle.

In view of such circumstances, an object of the present disclosure is to provide a vehicle travel data estimation apparatus, a program, and a vehicle travel data estimation method that enable easy estimation of travel data of a vehicle.

### (Solution to Problem)

(1) A vehicle travel data estimation apparatus according to one embodiment of the present disclosure comprises:
   a controller configured to
      acquire information on a departure point and information on a destination point as information relating to travel of a vehicle,
      estimate a travel route of the vehicle based on the information on the departure point and the information on the destination point, and
      estimate travel data on the vehicle during travel on the travel route based on the travel route estimated,
   wherein the travel data includes data on at least one of speed, acceleration, and travel distance.
(2) A vehicle travel data estimation apparatus according to one embodiment of the present disclosure is the vehicle travel data estimation apparatus described in (1) above,
   wherein the controller is configured to estimate a wear state of a tire of the vehicle and a remaining durability of a base tire of the vehicle, based on the travel data.
(3) A vehicle travel data estimation apparatus according to one embodiment of the present disclosure is the vehicle travel data estimation apparatus described in (1) or (2) above,
   wherein the controller is configured to
   calculate a lateral acceleration based on data on the speed included in the travel data and curvature data on a road included in the travel route,
   calculate a longitudinal acceleration based on signal information on a road included in the travel route, and
   estimate the wear state of the tire of the vehicle based on the lateral acceleration and the longitudinal acceleration.
(4) A vehicle travel data estimation apparatus according to one embodiment of the present disclosure is the vehicle travel data estimation apparatus described in any one of (1) to (3) above,
   further comprising a storage configured to store a database associating the travel route and the travel data,
   wherein the controller is configured to estimate the travel data based on the travel route with reference to the database.
(5) A vehicle travel data estimation apparatus according to one embodiment of the present disclosure is the vehicle travel data estimation apparatus described in any one of (1) to (4) above,
   wherein the database associates different travel data with the travel route according to time and date.
(6) A vehicle travel data estimation apparatus according to one embodiment of the present disclosure is the vehicle travel data estimation apparatus described in any one of (1) to (5) above,
   wherein data on the speed and the acceleration included in the travel data are time-series data.
(7) A vehicle travel data estimation apparatus according to one embodiment of the present disclosure is the vehicle travel data estimation apparatus described in any one of (1) to (6) above,
   wherein the controller is configured to
   further acquire information on a waypoint as information relating to travel of the vehicle, and
   estimate the travel route of the vehicle based on the information on the departure point, the information on the destination point, and the information on the waypoint.
(8) A vehicle travel data estimation apparatus according to one embodiment of the present disclosure is the vehicle travel data estimation apparatus described in any one of (1) to (7) above,
   wherein the controller is configured to
   acquire position information on the vehicle from the vehicle at predetermined time intervals, and
   estimate the travel route of the vehicle by using two pieces of the position information on the vehicle acquired at the predetermined time intervals as the information on the departure point and the information on the destination point.
(9) A vehicle travel data estimation apparatus according to one embodiment of the present disclosure is the vehicle travel data estimation apparatus described in any one of (1) to (8) above,
   wherein the controller is configured to estimate the travel route so as to obtain a shortest travel distance or a shortest travel time from the departure point to the destination point.
(10) A vehicle travel data estimation apparatus according to one embodiment of the present disclosure is the vehicle travel data estimation apparatus described in any one of (1) to (9) above,
   wherein the controller is configured to estimate the travel route by weighting according to road width so as to increase a probability that a road with a wide road width is included in the travel route.
(11) A vehicle travel data estimation apparatus according to one embodiment of the present disclosure is the vehicle travel data estimation apparatus described in any one of (1) to (10) above,
   wherein the controller is configured to estimate the travel route by weighting according to legal speed so as to increase a probability that a road with a high legal speed is included in the travel route.
(12) A program according to one embodiment of the present disclosure is configured to cause a vehicle travel data estimation apparatus to execute operations comprising:
   acquiring information on a departure point and information on a destination point as information relating to travel of a vehicle;
   estimating a travel route of the vehicle based on the information on the departure point and the information on the destination point; and
   estimating travel data on the vehicle during travel on the travel route based on the travel route estimated,
   wherein the travel data includes data on at least one of speed, acceleration, and travel distance.
(13) A vehicle travel data estimation method according to one embodiment of the present disclosure is a vehicle travel data estimation method in a vehicle travel data estimation apparatus, comprising:
   acquiring information on a departure point and information on a destination point as information relating to travel of a vehicle;
   estimating a travel route of the vehicle based on the information on the departure point and the information on the destination point; and
   estimating travel data on the vehicle during travel on the travel route based on the travel route estimated,
   wherein the travel data includes data on at least one of speed, acceleration, and travel distance.

### (Advantageous Effect)

According to the present disclosure, it is possible to provide a vehicle travel data estimation apparatus, a program, and a vehicle travel data estimation method that enable easy estimation of travel data of a vehicle.

### BRIEF DESCRIPTION OF THE DRAWINGS

In the accompanying drawings:
FIG. 1 is a diagram illustrating a configuration of a vehicle travel data estimation system including a vehicle travel data estimation apparatus according to one embodiment of the present disclosure;
FIG. 2 is a block diagram illustrating a configuration of a vehicle travel data estimation apparatus according to one embodiment of the present disclosure;
FIG. 3 is a diagram illustrating an example of a state in which a travel route is estimated; and
FIG. 4 is a flowchart illustrating an operation of a vehicle travel data estimation apparatus according to one embodiment of the present disclosure.

Hereinafter, an embodiment of the present disclosure will be described with reference to the drawings.

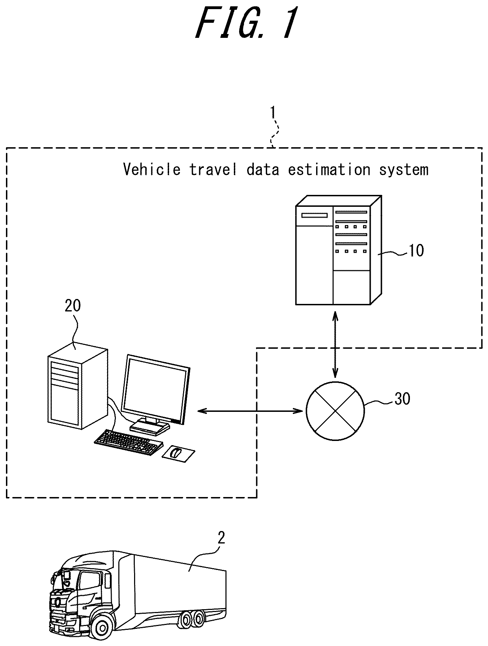

FIG. 1 is a diagram illustrating the configuration of a vehicle travel data estimation system 1 including a vehicle travel data estimation apparatus 10 according to an embodiment of the present disclosure.

The vehicle travel data estimation system 1 includes the vehicle travel data estimation apparatus 10 and a terminal device 20. The vehicle travel data estimation apparatus 10 and the terminal device 20 are communicably connected via a network 30. The network 30 may be a network including a mobile communication network and the Internet, among others.

The vehicle travel data estimation apparatus 10 is, for example, a dedicated computer configured to function as a server. The vehicle travel data estimation apparatus 10 may also be a general-purpose PC (Personal Computer).

The vehicle 2 illustrated in FIG. 1 may be, for example, a truck of a transportation company. Note that the vehicle 2 is not limited to a truck and may be any type of vehicle. The vehicle 2 may be, for example, a passenger car, a bus, a construction vehicle, or the like. Further, the organization owning the vehicle 2 is not limited to a transportation company, and an organization other than a transportation company may own the vehicle 2.

The terminal device 20 is a terminal device operated by an operator of an organization that owns the vehicle 2. For example, when the vehicle 2 is a truck of a transportation company, the terminal device 20 may be installed at the transportation company. The terminal device 20 may be, for example, a PC, a smartphone, a tablet, or the like. The organization owning the terminal device 20 is not limited to a transportation company, and an organization other than a transportation company may own the terminal device 20.

When the terminal device 20 acquires information on the departure point and information on the destination point of the vehicle 2 by an input operation of the operator, it transmits the information on the departure point and the information on the destination point of the vehicle 2 to the vehicle travel data estimation apparatus 10 via the network 30. Note that the "departure point" and "destination point" herein do not necessarily have to be the actual departure point and destination point of the vehicle 2, and may be any two pieces of position information. In the present embodiment, the terms "departure point" and "destination point" are used for the two pieces of position information.

The vehicle travel data estimation apparatus 10 acquires the information on the departure point and the information on the destination point of the vehicle 2 from the terminal device 20 via the network 30.

The vehicle travel data estimation apparatus 10 estimates a travel route of the vehicle 2 based on the acquired information on the departure point and the information on the destination point. The vehicle travel data estimation apparatus 10 estimates travel data of the vehicle 2 based on the estimated travel route of the vehicle 2.

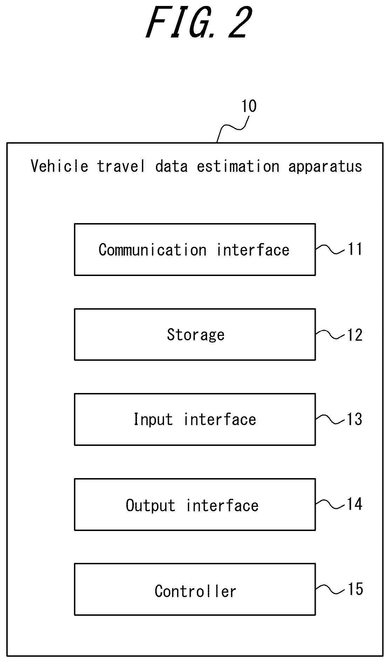

Before describing the details of the operation of the vehicle travel data estimation apparatus 10, the configuration of the vehicle travel data estimation apparatus 10 according to an embodiment of the present disclosure will be described with reference to FIG. 2.

The vehicle travel data estimation apparatus 10 includes a communication interface 11, a storage 12, an input interface 13, an output interface 14, and a controller 15.

The communication interface 11 includes a communication module for connecting to the network 30. For example, the communication interface 11 may include a communication module compatible with a LAN (Local Area Network). In one embodiment, the vehicle travel data estimation apparatus 10 is connected to the network 30 via the communication interface 11. The communication interface 11 transmits and receives various information via the network 30. The communication interface 11 is capable of communicating with the terminal device 20 via the network 30.

The storage 12 is, for example, a semiconductor memory, magnetic memory, or optical memory, but is not limited thereto. The storage 12 may function as, for example, a main storage device, an auxiliary storage device, or a cache memory. The storage 12 stores any information used in the operation of the vehicle travel data estimation apparatus 10. For example, the storage 12 may store system programs, application programs, and various information received by the communication interface 11. The information stored in the storage 12 may be updated by information received from the network 30 via the communication interface 11, for example. A part of the storage 12 may be installed outside the vehicle travel data estimation apparatus 10. In that case, the part of the storage 12 installed externally may be connected to the vehicle travel data estimation apparatus 10 via any interface.

The input interface 13 includes one or more input interfaces that detect user input and acquire input information based on user operations. For example, the input interface 13 may include physical keys, capacitive keys, a touchscreen provided integrally with the display of the output interface 14, or a microphone for receiving voice input, but is not limited thereto.

The output interface 14 includes one or more output interfaces for outputting information and notifying the user. For example, the output interface 14 may include a display for outputting information as images, a speaker for outputting information as sound, or the like, but is not limited thereto.

The controller 15 includes at least one processor, at least one dedicated circuit, or a combination thereof. The processor may be a general-purpose processor such as a CPU (Central Processing Unit) or GPU (Graphics Processing Unit), or a dedicated processor specialized for specific processing. The dedicated circuit may be, for example, an FPGA (Field-Programmable Gate Array) or ASIC (Application Specific Integrated Circuit). The controller 15 executes processing related to the operation of the vehicle travel data estimation apparatus 10 while controlling each unit of the vehicle travel data estimation apparatus 10.

### (Operation of the Vehicle Travel Data Estimation Apparatus)

Next, the operation of the vehicle travel data estimation apparatus 10 will be described. Hereinafter, the case where the terminal device 20 is installed at a transportation company will be described as an example.

An operator of the transportation company inputs information on the departure point and information on the destination point of the vehicle 2 into the terminal device 20. The vehicle 2 may be, for example, a truck of the transportation company. When the vehicle 2 is a truck of the transportation company, the departure point and the destination point are determined, and it is often the case that the same travel route is repeatedly traveled.

When the terminal device 20 acquires the information on the departure point and the information on the destination point of the vehicle 2 by an input operation of the operator, it transmits the information on the departure point and the information on the destination point of the vehicle 2 to the vehicle travel data estimation apparatus 10 via the network 30.

The communication interface 11 of the vehicle travel data estimation apparatus 10 receives the information on the departure point and the information on the destination point of the vehicle 2 transmitted by the terminal device 20. The controller 15 acquires the information on the departure point and the information on the destination point of the vehicle 2 transmitted by the terminal device 20 via the communication interface 11. In this way, the controller 15 acquires, as information relating to travel of the vehicle 2, the information on the departure point and the information on the destination point of the vehicle 2.

The controller 15 estimates a travel route of the vehicle 2 based on the acquired information on the departure point and the information on the destination point of the vehicle 2. When estimating the travel route, the controller 15 may refer to map data stored in the storage 12 to estimate the travel route. Alternatively, when an external server stores map data, the controller 15 may refer to the map data stored in the external server to estimate the travel route.

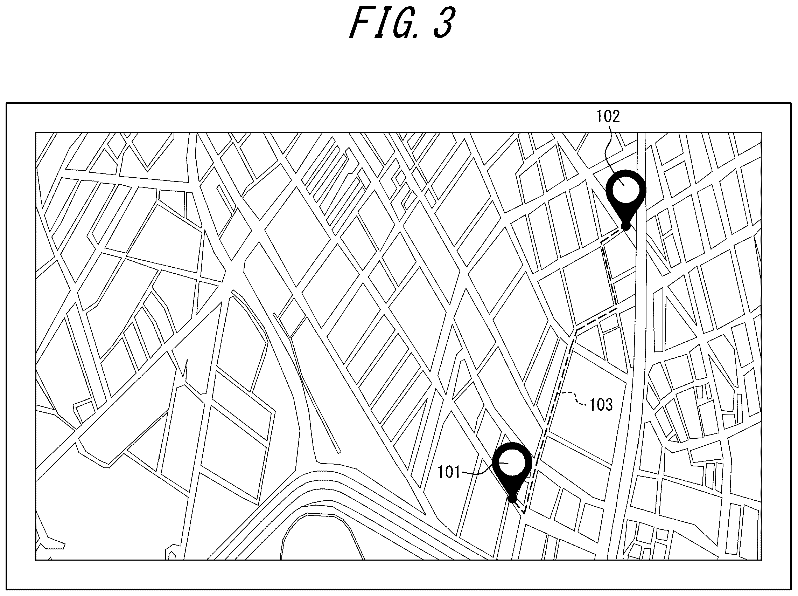

FIG. 3 illustrates an example in which the controller 15 estimates a travel route of the vehicle 2 based on the information on the departure point and the information on the destination point of the vehicle 2. In the example depicted in FIG. 3, the controller 15 estimates a travel route 103 of the vehicle 2 based on a departure point 101 and a destination point 102 of the vehicle 2.

When estimating the travel route, the controller 15 may estimate the travel route of the vehicle 2 so as to obtain the shortest travel distance or the shortest travel time from the departure point to the destination point. Normally, the vehicle 2 is highly likely to travel a route with the shortest travel distance or the shortest travel time. Therefore, by estimating the travel route so as to obtain the shortest travel distance or the shortest travel time, the controller 15 can estimate the travel route with high accuracy.

Alternatively, when estimating the travel route, the controller 15 may estimate the travel route by weighting according to road width so as to increase the probability that a road with a wide road width is included in the travel route. Here, weighting according to road width means weighting so that the wider the road, the more likely it is to be included in the estimated travel route. The controller 15 may acquire information on the road width of roads by referring to map data stored in the storage 12.

For example, when the vehicle 2 is a large vehicle such as a truck, it is highly likely to travel on roads with a wide road width. Therefore, by estimating the travel route by weighting according to road width, the controller 15 can estimate the travel route with high accuracy.

Alternatively, when estimating the travel route, the controller 15 may estimate the travel route by weighting according to legal speed so as to increase the probability that a road with a high legal speed is included in the travel route. Here, weighting according to legal speed means weighting so that the higher the legal speed of the road, the more likely it is to be included in the estimated travel route. The controller 15 may acquire information on the legal speed of roads by referring to map data stored in the storage 12.

The vehicle 2 is highly likely to travel on roads with a high legal speed in order to shorten travel time. Therefore, by estimating the travel route by weighting according to legal speed, the controller 15 can estimate the travel route with high accuracy.

In addition to the information on the departure point and the information on the destination point of the vehicle 2, the controller 15 may further acquire information on a waypoint of the vehicle 2, and estimate the travel route of the vehicle 2 based on the information on the departure point, the information on the destination point, and the information on the waypoint.

In this case, the terminal device 20 further acquires information on a waypoint of the vehicle 2 by an input operation of the operator, and transmits the acquired information on the waypoint of the vehicle 2 to the vehicle travel data estimation apparatus 10 via the network 30.

The communication interface 11 of the vehicle travel data estimation apparatus 10 receives the information on the waypoint of the vehicle 2 transmitted by the terminal device 20. The controller 15 acquires the information on the waypoint of the vehicle 2 transmitted by the terminal device 20 via the communication interface 11.

In this way, by estimating the travel route of the vehicle 2 based on the information on the waypoint of the vehicle 2 in addition to the information on the departure point and the information on the destination point, the controller 15 can estimate the travel route with even higher accuracy.

The controller 15 may acquire position information on the vehicle 2 at predetermined time intervals, and estimate the travel route of the vehicle 2 by using two pieces of the position information on the vehicle 2 acquired at the predetermined time intervals as the information on the departure point and the information on the destination point. The predetermined time interval may be, for example, an interval of several minutes.

In this case, the vehicle 2 transmits position information on the vehicle 2 acquired by GPS (Global Positioning System) or the like to the vehicle travel data estimation apparatus 10 via the network 30 at predetermined time intervals.

The communication interface 11 of the vehicle travel data estimation apparatus 10 receives the position information on the vehicle 2 transmitted by the vehicle 2 at predetermined time intervals. The controller 15 acquires the position information on the vehicle 2 transmitted by the vehicle 2 at predetermined time intervals via the communication interface 11.

In this way, by estimating the travel route of the vehicle 2 using two pieces of the position information on the vehicle 2 acquired at predetermined time intervals as the information on the departure point and the information on the destination point, the controller 15 can estimate the travel route with even higher accuracy.

When estimating the travel route, the controller 15 may estimate the travel route of the vehicle 2 based on a trained model constructed based on big data in which past vehicle travel data is accumulated. The trained model may be stored in the storage 12.

When the controller 15 estimates the travel route, it estimates travel data of the vehicle 2 based on the estimated travel route.

Here, the travel data of the vehicle 2 includes at least one of data on speed and acceleration of the vehicle 2 when traveling on the estimated travel route, and data on travel distance when the vehicle 2 has traveled the estimated travel route. The travel data of the vehicle 2 may include, in addition to at least one of data on speed, acceleration, and travel distance, other data.

The data on speed and acceleration included in the travel data of the vehicle 2 may be time-series data.

The storage 12 stores a database associating travel routes and travel data. This database is a database created by associating travel data with travel routes in advance and stored in the storage 12. Note that the database associating travel routes and travel data is not limited to being stored in the storage 12. The database associating travel routes and travel data may be stored in an external server. In the present embodiment, the database associating travel routes and travel data will be described as being stored in the storage 12.

The controller 15 refers to the database stored in the storage 12 and estimates travel data based on the estimated travel route. With this configuration, the controller 15 can refer to the database associating travel routes and travel data and estimate travel data based on the travel route with high accuracy.

The database may associate different travel data with the travel route according to time and date. For example, the database may associate different travel data according to time, even if the travel route is the same. Even for the same travel route, the speed of the vehicle 2 may differ between daytime and nighttime. Therefore, by associating different travel data with the travel route according to time, the controller 15 can estimate travel data with high accuracy.

Further, for example, the database may associate different travel data according to date, even if the travel route is the same. Even for the same travel route, the speed of the vehicle 2 may differ between weekdays and holidays. Also, the speed of the vehicle 2 may differ depending on the season. Therefore, by associating different travel data with the travel route according to date, the controller 15 can estimate travel data with high accuracy.

The controller 15 can estimate a wear state of a tire of the vehicle 2 and a remaining durability of a base tire of the vehicle 2 based on the estimated travel data. Here, the wear state of the tire refers to the wear state of the tread rubber portion of the tire. The base tire is the portion of the tire excluding the tread portion and is the portion reused when retreading the tire. The remaining durability of the base tire is an index indicating how much longer the base tire can be used.

When estimating the wear state of the tire of the vehicle 2, the controller 15 may estimate the wear state of the tire of the vehicle 2 based on the lateral acceleration and longitudinal acceleration of the vehicle 2 when traveling on the estimated travel route.

The controller 15 may calculate the lateral acceleration based on the data on speed included in the estimated travel data and curvature data on a road included in the estimated travel route. The controller 15 may acquire information on the curvature data of the road by referring to map data stored in the storage 12. With this configuration, the controller 15 can calculate the lateral acceleration with high accuracy.

The controller 15 may calculate the longitudinal acceleration based on signal information on a road included in the estimated travel route. When the vehicle 2 stops at a red signal, longitudinal acceleration is generated in the vehicle 2 due to deceleration before the signal and acceleration when the signal turns green. Therefore, the controller 15 can calculate the longitudinal acceleration based on signal information on a road included in the estimated travel route. The controller 15 may acquire signal information on the road by referring to map data stored in the storage 12. With this configuration, the controller 15 can calculate the longitudinal acceleration with high accuracy.

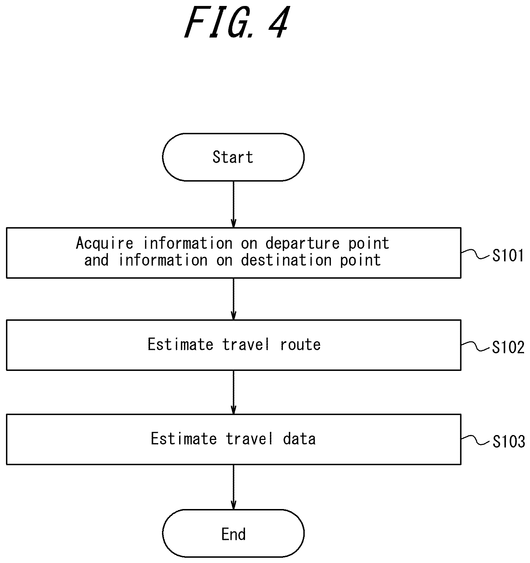

The operation of the vehicle travel data estimation apparatus 10 will be described with reference to the flowchart depicted in FIG. 4.

Step S101: The controller 15 of the vehicle travel data estimation apparatus 10 acquires information on the departure point and information on the destination point of the vehicle 2 from the terminal device 20.

Step S102: The controller 15 estimates a travel route of the vehicle 2 based on the acquired information on the departure point and the information on the destination point of the vehicle 2.

Step S103: The controller 15 estimates travel data of the vehicle 2 based on the estimated travel route. The controller 15 can estimate a wear state of a tire of the vehicle 2 and a remaining durability of a base tire of the vehicle 2 based on the estimated travel data.

As described above, in the vehicle travel data estimation apparatus 10 according to the present embodiment, the controller 15 acquires information on the departure point and information on the destination point as information relating to travel of the vehicle 2, estimates a travel route of the vehicle 2 based on the information on the departure point and the information on the destination point, and estimates travel data of the vehicle 2 during travel on the estimated travel route. In this way, the vehicle travel data estimation apparatus 10 according to the present embodiment can estimate travel data of the vehicle 2 simply by acquiring information on the departure point and information on the destination point. That is, the vehicle travel data estimation apparatus 10 according to the present embodiment can estimate travel data of the vehicle 2 without mounting sensors for detecting speed, acceleration, or the like on the vehicle 2. Therefore, the vehicle travel data estimation apparatus 10 according to the present embodiment does not require mounting sensors for detecting speed, acceleration, or the like on the vehicle 2, and can easily estimate travel data of the vehicle 2.

Further, the vehicle travel data estimation apparatus 10 according to the present embodiment can estimate the wear state of the tire of the vehicle 2 and the remaining durability of the base tire of the vehicle 2, based on the travel data of the vehicle 2 estimated in this manner.

The embodiments of the present disclosure have been described above with reference to the accompanying drawings and examples; however, it should be noted that those skilled in the art can easily make various modifications or alterations based on the present disclosure. Therefore, it should be understood that such modifications or alterations are also included within the scope of the present disclosure. For example, the functions included in each component or each step can be rearranged as long as there is no logical inconsistency, and it is possible to combine a plurality of components or steps into one, or to divide them. The embodiments according to the present disclosure can also be realized as a storage medium recording a program executed by a processor provided in the apparatus. It should be understood that these are also included within the scope of the present disclosure.

For example, it is also possible to configure a general-purpose electronic device such as a computer or a smartphone to function as the vehicle travel data estimation apparatus 10 according to the above-described embodiment. Specifically, it is conceivable to store a program describing processing contents for realizing each function of the vehicle travel data estimation apparatus 10 and the like according to the embodiment in the memory of the electronic device, and to have the processor of the electronic device read and execute the program. Therefore, the disclosure according to one embodiment can also be realized as a program executable by a processor.

### [Contribution to the Sustainable Development Goals (SDGs) Led by the United Nations]

The SDGs have been proposed toward the realization of a sustainable society. One embodiment of the present disclosure can be considered as a technology that contributes to, for example, "No. 12 Responsible Consumption and Production" and "No. 13 Climate Action."

### REFERENCE SIGNS LIST

- 1: Vehicle travel data estimation system
- 2: Vehicle
- 10: Vehicle travel data estimation apparatus
- 11: Communication interface
- 12: Storage
- 13: Input interface
- 14: Output interface
- 15: Controller
- 20: Terminal device
- 30: Network
- 101: Departure point
- 102: Destination point
- 103: Travel route

## Claims

1. A vehicle travel data estimation apparatus comprising:
a controller configured to
acquire information on a departure point and information on a destination point as information relating to travel of a vehicle;
estimate a travel route of the vehicle based on the information on the departure point and the information on the destination point; and
estimate travel data on the vehicle during travel on the travel route based on the travel route estimated,
wherein the travel data includes data on at least one of speed, acceleration, and travel distance.

2. The vehicle travel data estimation apparatus according to claim 1, wherein the controller is configured to estimate a wear state of a tire of the vehicle and a remaining durability of a base tire of the vehicle, based on the travel data.

3. The vehicle travel data estimation apparatus according to claim 2,
wherein the controller is configured to
calculate a lateral acceleration based on data on the speed included in the travel data and curvature data on a road included in the travel route;
calculate a longitudinal acceleration based on signal information on a road included in the travel route; and
estimate the wear state of the tire of the vehicle based on the lateral acceleration and the longitudinal acceleration.

4. The vehicle travel data estimation apparatus according to claim 1, further comprising
a storage configured to store a database associating the travel route and the travel data,
wherein the controller is configured to estimate the travel data based on the travel route with reference to the database.

5. The vehicle travel data estimation apparatus according to claim 4, wherein the database associates different travel data with the travel route according to time and date.

6. The vehicle travel data estimation apparatus according to claim 1, wherein data on the speed and the acceleration included in the travel data are time-series data.

7. The vehicle travel data estimation apparatus according to claim 1,
wherein the controller is configured to
further acquire information on a waypoint as information relating to travel of the vehicle; and
estimate the travel route of the vehicle based on the information on the departure point, the information on the destination point, and the information on the waypoint.

8. The vehicle travel data estimation apparatus according to claim 1,
wherein the controller is configured to
acquire position information on the vehicle from the vehicle at predetermined time intervals, and
estimate the travel route of the vehicle by using two pieces of the position information on the vehicle acquired at the predetermined time intervals as the information on the departure point and the information on the destination point.

9. The vehicle travel data estimation apparatus according to claim 1, wherein the controller is configured to estimate the travel route so as to obtain a shortest travel distance or a shortest travel time from the departure point to the destination point.

10. The vehicle travel data estimation apparatus according to claim 1, wherein the controller is configured to estimate the travel route by weighting according to road width so as to increase a probability that a road with a wide road width is included in the travel route.

11. The vehicle travel data estimation apparatus according to claim 1, wherein the controller is configured to estimate the travel route by weighting according to legal speed so as to increase a probability that a road with a high legal speed is included in the travel route.

12. A program configured to cause a vehicle travel data estimation apparatus to execute operations comprising:
acquiring information on a departure point and information on a destination point as information relating to travel of a vehicle;
estimating a travel route of the vehicle based on the information on the departure point and the information on the destination point; and
estimating travel data on the vehicle during travel on the travel route based on the travel route estimated,
wherein the travel data includes data on at least one of speed, acceleration, and travel distance.

13. A vehicle travel data estimation method in a vehicle travel data estimation apparatus, the vehicle travel data estimation method comprising:
acquiring information on a departure point and information on a destination point as information relating to travel of a vehicle;
estimating a travel route of the vehicle based on the information on the departure point and the information on the destination point; and
estimating travel data on the vehicle during travel on the travel route based on the travel route estimated,
wherein the travel data includes data on at least one of speed, acceleration, and travel distance.
